(19) Europäisches Patentamt
European Patent Office
Office européen des brevets

(11) **EP 1 998 278 A1**

(12) **EUROPEAN PATENT APPLICATION**

(43) Date of publication:
**03.12.2008 Bulletin 2008/49**

(51) Int Cl.:
***G06Q 10/00*** *(2006.01)*

(21) Application number: **08251877.0**

(22) Date of filing: **29.05.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **30.05.2007 US 940863 P**
**31.07.2007 US 831257**

(71) Applicant: **Verint Systems Inc.**
**Melville, NY 11747 (US)**

(72) Inventors:
• **Seetharaman, Krithika**
**Santa Clara**
**California, 95051 (US)**

• **Fama, Jason**
**Redwood City**
**California 94061 (US)**
• **Bourke, Michael Robert**
**Redwood City**
**California 94061 (US)**
• **Lawrence, Richard M.**
**Seattle**
**Washington 98121 (US)**

(74) Representative: **Bibby, William Mark et al**
**Mathisen, Macara & Co**
**The Coach House**
**6-8 Swakeleys Road**
**Ickenham**
**Uxbridge UB10 8BZ (GB)**

(54) **System and method for long term forecasting**

(57) Systems and methods of strategic forecasting of demand are disclosed. One such method comprises receiving demand data and computing a variant factor associated with a variant. The variant includes a variant date and a measure of demand on the variant date. The method further includes generating a strategic forecast. The strategic forecast includes a forecast for the variant date, based on the variant factor and on the demand data for the variant date.

FIG. 1

EP 1 998 278 A1

**Description**

**FIELD OF THE DISCLOSURE**

The present disclosure relates to strategic forecasting for customer centers, and more particularly, to generating strategic forecasts that take into account variations in demand.

**BACKGROUND**

Conventional strategic planning solutions for customer centers create a strategic forecast for demand at the daily level, based on past trends. However, such conventional solutions do not take into account the changes in demand associated with variant, atypical, or outlier, days. Variant days are those for which demand is atypical compared to surrounding or corresponding days. For example, a reduction in demand on Tuesday July 4 as compared to other Tuesdays in July, or an increase in demand on Wednesday July 5 as compared to other Wednesdays in July, or an increase in demand on Thursday June 11 as compared to other Thursdays in same month of June or other Thursdays in the year. A forecast which does not take variant days into account is less accurate than one that does. Thus, a demand arises for this and other needs to be met.

**SUMMARY**

Systems and methods of strategic forecasting of demand are disclosed. One such method comprises receiving demand data and computing a variant factor associated with a variant. The variant includes a variant date and a measure of demand on the variant date. The method further includes generating a strategic forecast. The strategic forecast includes a forecast for the variant date, based on the variant factor and on the demand data for the variant date.

**BRIEF DESCRIPTION OF THE DRAWINGS**

Many aspects of the disclosure can be better understood with reference to the following drawings. The components in the drawings are not necessarily to scale, emphasis instead being placed upon clearly illustrating the principles of the present disclosure.

FIG. 1 is a block diagram of a customer center environment.

FIG. 2 is a high-level view of components in one embodiment of the work force manager (WFMS) of FIG. 1.

FIG. 3 is a diagram illustrating data flow between components of one embodiment of the strategic forecaster of FIG. 2.

FIGs. 4A-4C are screen shots of a graphical user interface for providing variant descriptions.

FIG. 5 is a flowchart of a forecasting process implemented by one embodiment of the strategic forecaster of FIG. 2.

FIG. 6 is a flowchart of the variant factor computation block of FIG. 5.

FIG. 7 is a flowchart of a forecasting process implemented by another embodiment of the strategic forecaster of FIG. 2.

FIG. 8 is a hardware block diagram of a general-purpose computer that can be used to implement one or more of the components of the strategic forecaster of FIG. 2.

**DETAILED DESCRIPTION**

Disclosed herein are systems and methods for long-term forecasting that take into account variations in demand which correspond to variant or atypical periods. A person of ordinary skill in the art should appreciate that some degree of variation in demand can be accounted for by seasonality factors. In this disclosure, "variants" or "atypicals" correspond to variations in demand that occur during an identifiable time period but may not follow a daily, weekly or monthly pattern (as do seasonal variations). Variants can be described in terms of the the measured demand (e.g., call volume, AHT) during a particular period of atypical demand. In the embodiments described in this diclosure, the time period for a variant is a calendar day, but other periods can be used also.

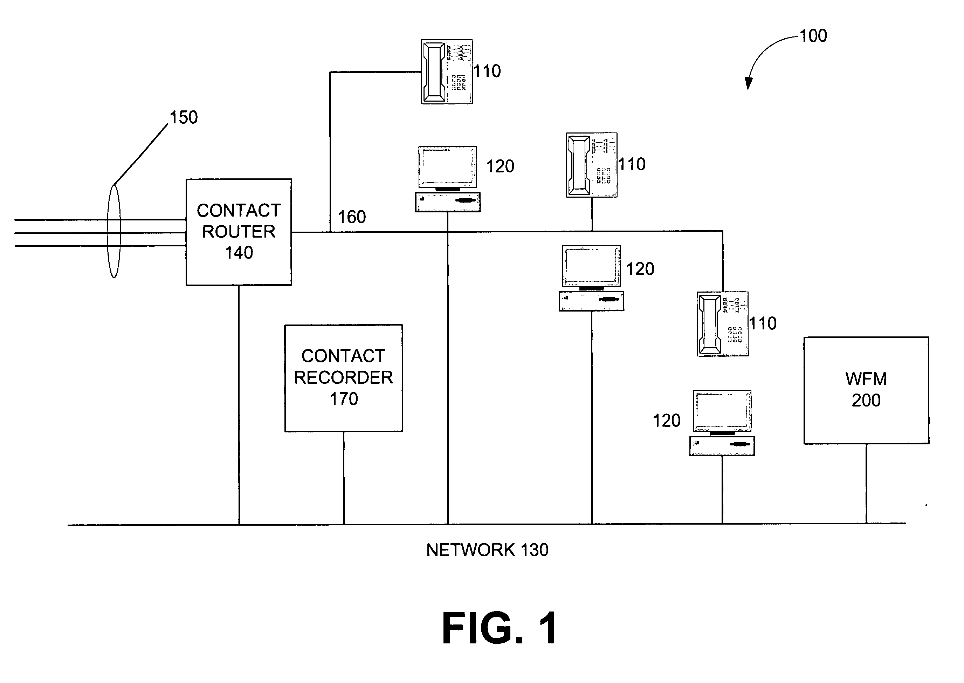

FIG. 1 is a block diagram of a customer center environment 100. The customer center 100 is staffed by agents who handle incoming and/or outgoing contacts. Although the traditional and most common form of contact is by phone, other types of contacts are becoming more common (e.g., text chat, web collaboration, email, and fax). An agent workspace includes an agent phone 110 and a workstation computer 120. A network 130 connects one or more of the workstations 120.

A contact router 140 distributes incoming contacts to available agents. When the contacts are made by traditional phone lines, the contact router 140 operates by connecting outside trunk lines 150 to agent trunk lines 160. In this environment, the contact router 140 may be implemented by an automatic call distributor (ACD), which queues calls until a suitable agent is available. Other types of contacts, such as Voice over Internet Protocol (VoIP) calls and computer-based contacts (e.g., chat, email) are routed over one or more data networks. These contacts are distributed over network 130 to one of the agent workstations 120.

During a customer contact, the agent interacts with one or more applications running on the workstation 120. Example workstation applications give the agent access to customer records, product information, ordering status, and transaction history, for example. The applications may access one or more business databases (not shown) via the network 130.

A contact recorder 170 provides the ability to capture or record contacts of many different types, including traditional and IP telephony environments, text chat, web collaboration, email, and fax. A recorded contact may consist of multiple streams of data. One stream may be considered a "content" stream: on a voice call, the content stream is a digitized voice stream; on a text chat contact, the content stream is text.

A customer center may include, but is not limited to, outsourced customer centers, outsourced customer relationship management, customer relationship management, voice of the customer, customer interaction, customer center, multi-media customer center, remote office, distributed enterprise, work-at-home agents, remote agents, branch office, back office, performance optimization, workforce optimization, hosted customer centers, and speech analytics, for example.

Customer center 100 also includes a workforce management system (WFMS) 200. WFMS 200 performs many functions. One such function is providing a customer center supervisor or manager with information about agents and contacts, both historical and real-time. Another function is supplying the supervisor with information on how well each agent complies with customer center policies. Yet another function is calculating staffing levels and creating agent schedules based on historical patterns of incoming contacts.

In one embodiment, WMFS 100 includes, is integrated with, or communicates with one or more of a performance manager, an evaluation manager, and a development manager. The evaluation manager allows various types of employee performance review processes to be managed (i.e., 360 degree reviews). The performance manager receives data from the evaluation manager and presents the performance data to the customer center manager through various scorecard views. The development manager tracks employee Learning/Development and detects a need for training.

It should be noted that customer center 100 herein can contain system which perform speech analytics (i.e., the analysis of recorded speech or real-time speech), and which can be used to perform a variety of functions, such as automated call evaluation, call scoring, quality monitoring, quality assessment and compliance/adherence. By way of example, speech analytics can be used to compare a recorded interaction to a script (e.g., a script that the agent was to use during the interaction). In other words, speech analytics can be used to measure how well agents adhere to scripts, and to identify which agents are "good" sales people and which ones need additional training. As such, speech analytics can be used to find agents who do not adhere to scripts. Yet in another example, speech analytics can measure script effectiveness, identify which scripts are effective and which are not, and find, for example, the section of a script that displeases or upsets customers (e.g., based on emotion detection). As another example, compliance with various policies can be determined. Such may be in the case of, for example, the collections industry where it is a highly regulated business and agents must abide by many rules. The speech analytics of the present disclosure may identify when agents are not adhering to their scripts and guidelines. This can potentially improve collection effectiveness and reduce corporate liability and risk.

In this regard, various types of recording components can be used to facilitate speech analytics. Specifically, such recording components can perform one or more of various functions such as receiving, capturing, intercepting, and tapping of data. This can involve the use of active and/or passive recording techniques, as well as the recording of voice and/or screen data.

It should be noted that speech analytics can be used in conjunction with such screen data (e.g., screen data captured from an agent's workstation/PC) for evaluation, scoring, analysis, adherence, and compliance purposes, for example. Such integrated functionality can improve the effectiveness and efficiency of, for example, quality assurance programs. For example, the integrated function can help companies to locate appropriate calls (and related screen interactions) for quality monitoring and evaluation. This type of "precision" monitoring improves the effectiveness and productivity of quality assurance programs.

Another aspect that can be accomplished involves fraud detection. In this regard, various manners can be used to determine the identity of a particular speaker. In some embodiments, speech analytics can be used independently and/or in combination with other techniques for performing fraud detection. Specifically, some embodiments can involve identification of a speaker (e.g., a customer) and correlating this identification with other information to determine whether a fraudulent claim for example is being made. If such potential fraud is identified, some embodiments can provide an alert. For example, the speech analytics of the present disclosure may identify the emotions of callers. The identified emotions can be used in conjunction with identifying specific concepts to help companies spot either agents or callers/customers who are involved in fraudulent activities.

Referring back to the collections example outlined above, by using emotion and concept detection, companies can identify which customers are attempting to mislead collectors into believing that they are going to pay. The earlier the company is aware of a problem account, the more recourse options they may have. Thus, the speech analytics of the present disclosure can function as an early warning system to reduce losses.

Also included in this disclosure are embodiments of integrated workforce optimization platforms, as discussed in U.S. Patent Application No. 11/359,356, filed on February 22, 2006, entitled "Systems and Methods for Workforce Optimization," and U.S. Patent Application No. 11/540,185, filed on September 29, 2006, entitled "Systems and Methods for facilitating Contact Center Coaching," both of which are hereby incorporated by reference in their entireties. At least one embodiment of an integrated workforce optimization platform integrates: (1) Quality Monitoring/Call Recording - voice of the customer; the complete customer experience across multimedia touch points; (2) Workforce Management - strategic forecasting and scheduling that drives efficiency and adherence, aids in planning, and helps facilitate optimum staffing and service levels; (3) Performance Management - key performance indicators (Kpis) and scorecards that analyze and help identify synergies, opportunities and improvement areas; (4) e-Learning - training, new information and protocol disseminated to staff, leveraging best practice customer interactions and delivering learning to support development; (5) Analytics - deliver insights from customer interactions to drive business performance; and/or (6) Coaching - feedback to promote efficient performance. By way of example, the integrated workforce optimization process and system can include planning and establishing goals - from both an enterprise and center perspective - to ensure alignment and objectives that complement and support one another. Such planning may be complemented with forecasting and scheduling of the workforce to ensure optimum service levels. Recording and measuring performance may also be utilized, leveraging quality monitoring/call recording to assess service quality and the customer experience.

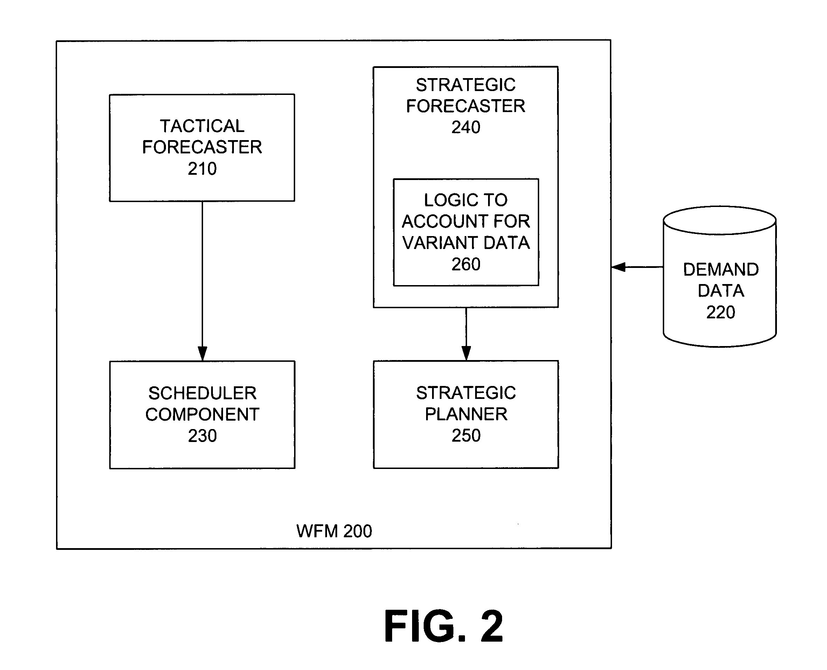

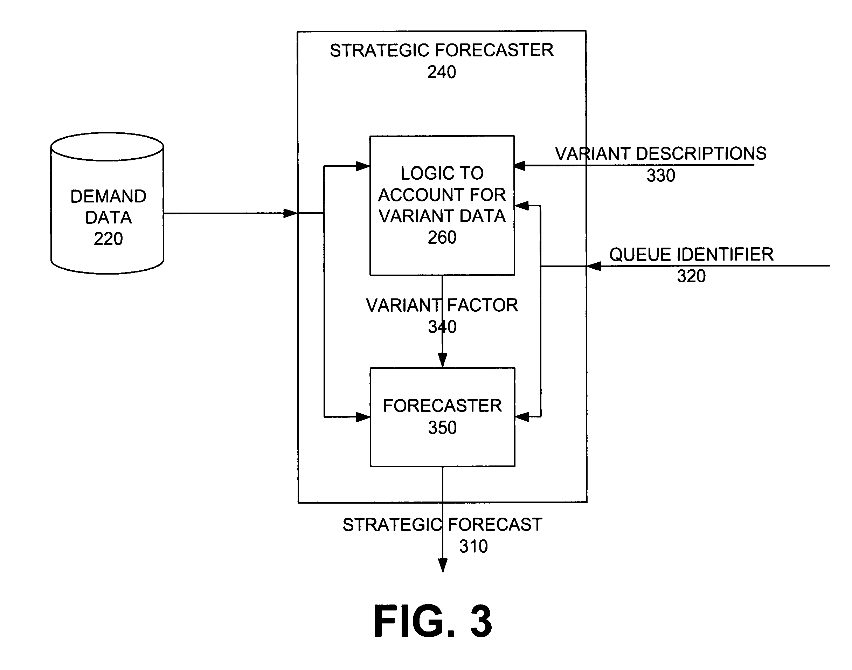

FIG. 2 is a high-level view of components in one embodiment of a work force manager (WFM) 200. WFM 200 performs many functions related to the agent workforce. The functionality of the entire WFM 200 is typically divided among several applications, executables, processes, or services. A tactical forecaster 210 predicts (future) demand based on past and/or current demand, where demand typically includes contact volume and handle time for intervals throughout a past period (stored as demand data 220). A scheduler 230 calculates staffing levels and agent schedules based on predicted demand. A strategic forecaster 240 (also referred to herein as strategic forecaster 240) creates a long-term forecast of future demand based on past demand, taking into account past trends and seasonality factors. A strategic planner 250 creates a long-term staffing and/or hiring plan based on the strategic forecast. Strategic forecaster 240 includes logic to account for variant data 260, which is described later in connection with FIGS. 3-7.

A person of ordinary skill in the art should appreciate that although tactical forecaster 210 and strategic forecaster 240 both produce forecasts of future demand, these two components deal with two different time frames and thus use different techniques in forecasting. Tactical forecaster 210 produces a short-term or tactical forecast, for periods in the short-range future (typically less than three months in the future), and with a relatively fine level of granularity (typically intra-day). In contrast, strategic forecaster 240 produces forecasts with a coarser level of granularity (typically per-day) for periods in the long-range future (typically more than three months in the future).

Understanding these differences, a person of ordinary skill in the art should also appreciate that these two types of forecasts are typically used for different purposes. A strategic forecast produced by strategic forecaster 240 is typically used to make long-range staffing decisions about how to change the composition of the staff in order to meet predicted demand: how many workers to hire over the next year; how many workers to train with new skills. In contrast, a tactical forecast produced by tactical forecaster 210 is typically used to make short-term decisions about how to use the existing staff in order to meet predicted demand: how many workers are to be assigned overtime in the next week; how many workers are to be denied time-off requests in the next month.

FIG. 3 is a diagram illustrating data flow between components of one embodiment of strategic forecaster 240. As discussed above, strategic forecaster 240 uses demand data 220 to produce a strategic forecast 310 for a particular queue or queues (as identified by input 320). Demand data 220 includes a measure of contacts per-day during a specific date range. The data typically includes call volume (CV) and average handle time (AHT), but other measures may be used. The measures in demand data 220 typically vary depending on seasonality factors such as day-of-week, week-of-month, and month-of-year. Some embodiments of strategic forecaster 240 compute seasonality factors from demand data 220, and use these factors to increase accuracy of strategic forecast 310. That is, if May 2006 experienced a call volume which was 8.7% higher than the average monthly call volume in 2006, then strategic forecast 310 would use this "May" factor in computing the predicted call volume in May 2007.

As described above, variations in demand that are not explained by seasonality can be considered variants, described in terms of the the measured demand (e.g., call volume, AHT) during a particular period of atypical demand. In the example embodiment of FIG. 3, logic to account for variant data 260 receives one or more descriptions of variant periods 330 from a user. In other embodiments (not shown), logic to account for variant data 260 identifies variant periods 330 using an automated process (without user input), or using a semiautomated process (with reduced user input).

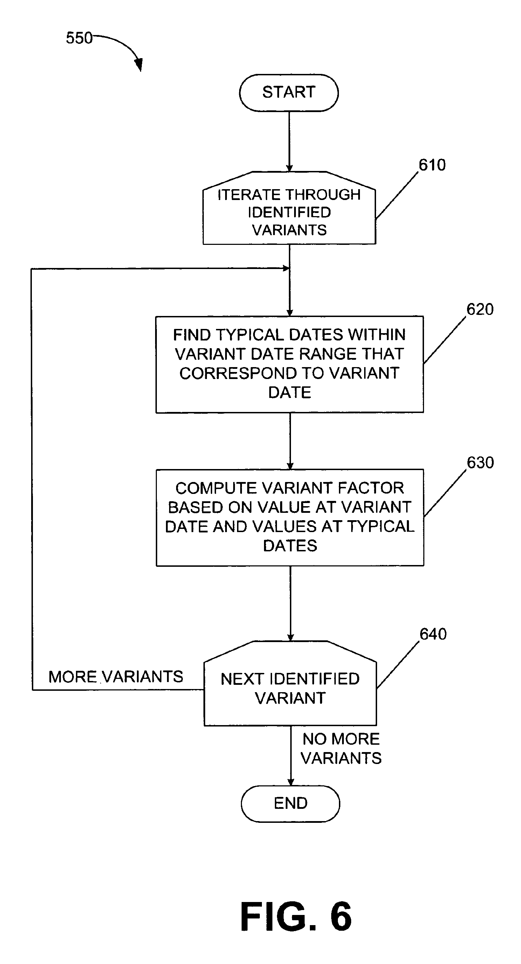

Logic to account for variant data 260 then uses techniques described below in connection with FIG. 6 to compute a variant factor 340 for each of the variations in demand corresponding to variant descriptions 330. Each variant factor 340 captures the effect which thae particular variant period has on demand. In other words, the variant factor 340 reveals what portion of demand during the variant period is accounted for by the particular period, rather than by other factors such as day-of-week, or week-of-month, or month-of-year.

Variant factors 340 are then provided to a forecaster 350, which uses variant factors 340 to produce strategic forecast 310. Strategic forecast 310 has increased accuracy compared to conventional strategic forecasts, since variant factors 340 are taken into consideration.

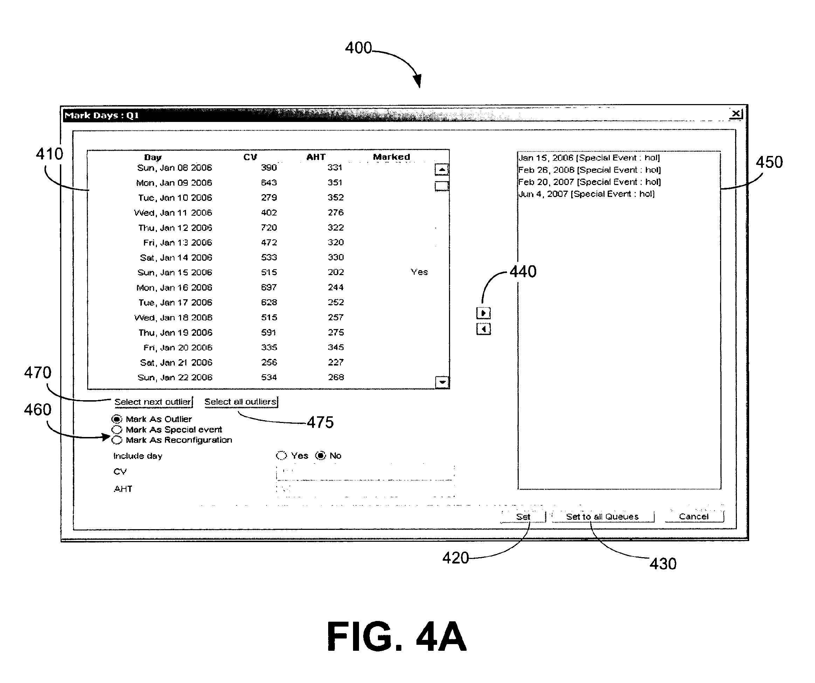

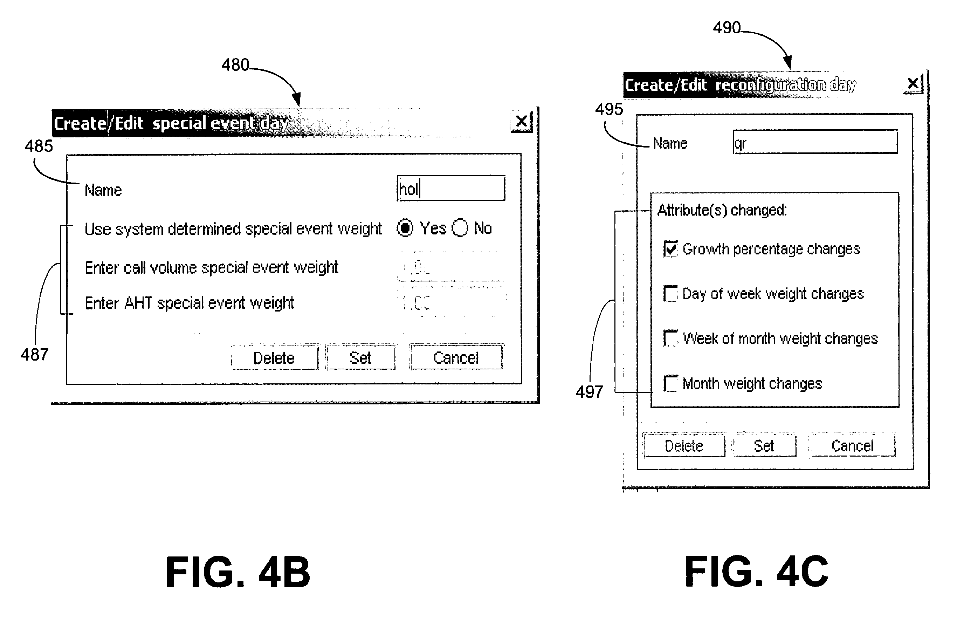

FIGs. 4A, 4B and 4C are screen shots of a graphical user interface for providing variant descriptions 330. Window 400 in FIG. 4A includes a list (410) of dates within a particular set of demand data 220. A user interacts with window 400 to specify which dates within list 410 are to be considered variants. The user applies the specified variant dates to the current queue by activating the "Set" button (420), or to all queues by activating the "Set All" button (430).

In this example interface, the user specifies variants by selecting one or more dates from list 410, and using the "Add" button (440) to copy the selected dates to the variant list (450). In addition to dates, list 410 includes call volume, average hold time, and status (e.g., whether or not a date is marked as variant). When choosing a date as a variant, the user also selects (through control 460) the type of variant: an outlier; a queue reconfiguration; or a special event.

. Queue reconfiguration outliers capture the effect of queue reconfiguration (i.e., change in the agent groups feeding into a queue) on demand for a particular queue. In conventional solutions which do not take into account the effect of a queue reconfiguration outlier on demand, the large variation in demand (as compared to normal) that occurs on queue reconfiguration days affects predicted demand for those days in the future. Since queue reconfiguration is not likely to occur on the same date in the future, this forecast is inaccurate.

Special event outliers are typically used to capture events that affect contact center demand, and that occur on dates that move from year to year (e.g., Christmas, July 4). Conventional solutions do take into account the effect of a special event outlier on demand. Therefore, the large variation in demand (as compared to normal) that occurs on special event days affects predicted demand for special event days in the future. However, if the actual day on which the special events occurs is different in the future, then this predicted demand is inaccurate. For example, the pattern of demand for a year in which July 4 falls on a Monday is likely to be different than the pattern for a year with July 4 on a Wednesday.

Another use of special event outliers is to capture dates that are specific to a particular contact center or campaign. For example, demand often increases in the last days of a billing cycle, but the billing cycle varies from one contact center to another. As another example, demand often increases during sale periods or blackout periods, but these periods vary from year to year and from campaign to campaign.

As noted above, the dates of special events can vary from year to year. Some embodiments of logic to account for variant data 260 allow the date range used to find variants to be different from the date range of demand data 220. For example, to produce a forecast for April through June of 2007, strategic forecaster 240 uses demand data 220 corresponding to April-June 2006. However, suppose that in 2007 the Good Friday holiday occurs in April, but that in 2006 the Good Friday holiday occurred in March. Logic to account for variant data 260 allows the user to specify March 2006-June 2006 as the variant data range, which in turn allows the user to mark Good Friday in March 2006 as a special event variant, even though March 2006 will not be used in computing seasonality factors or growth trends.

As just described, logic to account for variant data 260 allows a user to specify information about which days are variants - whether special event, queue reconfiguration or outliers. Referring back to FIG. 3, logic to account for variant data 260 uses these variant descriptions 330 to compute variant factors 340, and long term forecaster 350 uses variant factors 340 when producing strategic forecast 310 from demand data 220. (The process of computing and using variant factors 340 are described in further detail below in connection with FIG. 6.)

Some embodiments of logic to account for variant data 260 identify variant periods 330 using a semi-automated process. An example of such behavior can be seen in window 400 in FIG. 4A, which includes a "Select Next Outlier" button (470) and a "Select All Outliers" button (475). In response to activating Select Next Outlier 470, logic 260 identifies the next suspected outlier date. In some embodiments, the next suspected outlier date is the next date (in the date range under consideration) that contains contact data which is substantially different than data on corresponding days in previous weeks. In other embodiments, suspected outlier dates are those for which there is null, or no, data in demand data 220. The user may confirm this day as an outlier by adding the identified date to outlier list 450. Alternatively, the user may choose not to confirm the suspected date as an outlier. The Select All Outliers button 475 works in a similar manner, but identifies all suspected outlier dates in one action.

Some embodiments of logic to account for variant data 260 allow a user to provide additional information about some types of variants. An example of this can be seen in window 480 in FIG. 4B, which allows a user to provide a name (485) for a special event, and to provide weighting factors (487) for use in computing the effect of the special event on demand. Some embodiments use special event names 485 in computing variant factors 340, as is described later in connection with FIG. 6. Another example can be seen in window 490 in FIG. 4C, which allows a user to provide a name (495) for the queue reconfiguration and to describe the attributes (497) of the change to the queue.

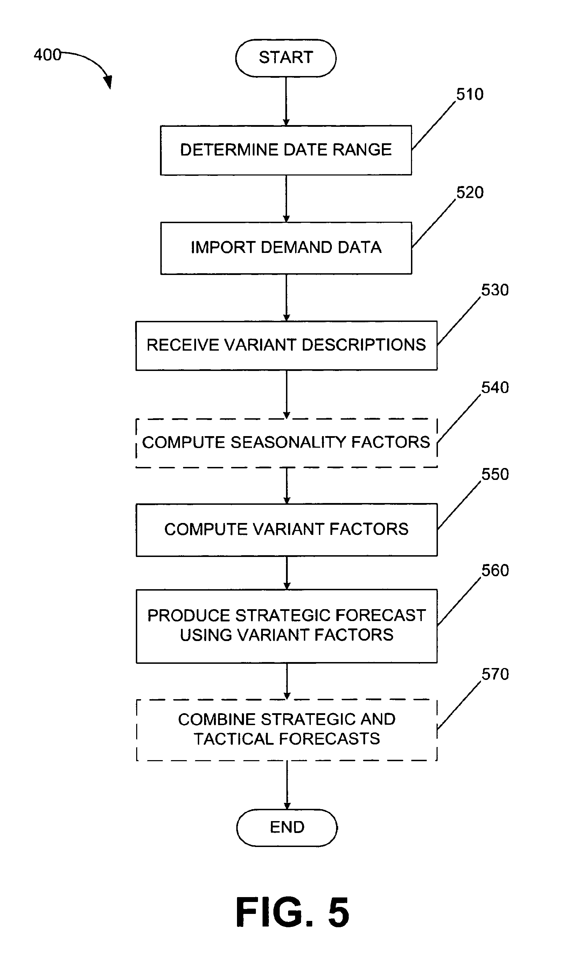

FIG. 5 is a flowchart of a process implemented by one embodiment of strategic forecaster 240. The process 500 begins at block 510, where the date range of demand data 220 and queue(s) to be used in forecasting are determined. These values may be specified as inputs, or defaults may be used. Next, demand data 220 is imported at block 520, for the specified date range and queue(s). A person of ordinary skill in the art should appreciate that the data can be imported from various sources and in various formats (e.g., a database, a file). When importing, some embodiments allow demand for specific queues to be imported while other queues are excluded, even when data for that queue is included in the file or database. In some embodiments, the demand is described per-month, or per-month and per-day. Typical measurements of demand include call volume (e.g., calls per week) and average handle time, but other measurements are also contemplated.

Next, at block 530, variant descriptions 330 are received from a user, or in some embodiments, are identified by examining demand data 220. Block 540 is optional. If present, seasonality factors such as month-of-year, day-of-month, and week-of-month are computed at block 540. Next, at block 550, an variant factor 340 is calculated for each variant description 330. (Variant factor computation is discussed in further detail in connection with FIG. 6.) Next, at block 560, a strategic forecast 310 is generated using variant factors 340 (and optional seasonality factors).

A person of ordinary skill in the art should appreciate that seasonality factors describe the amount that actual values deviate from the average value of the series. The calculation involves a comparison of the expected values of that period to the grand mean: the month-of-year effect is the ratio of that month's total, to the average monthly total; the day-of-month effect is the ratio of the average of that day's total, to the average daily total in that month; and the week-of-month effect is the ratio of that week's total to the average weekly total of that month. Thus, a month factor of 1.00 for a particular month indicates that the expected value of that month is 1/12 of the overall average. A month factor of 1.25 indicates that the expected value for that month is 25% greater than 1/12 of the overall average. A month factor of 0.80 indicates that the expected value for that month is 20% less than 1/12 of the overall average.

A person of ordinary skill in the art should also be familiar with techniques used to generate a strategic forecast 310 using demand data 220, so only a brief overview is given here, with a focus on how variant factors 340 are incorporated. Strategic forecast 310 is generated by computing the growth trend equation for demand data 220, and applying the trend and variant factors 340 (and optionally seasonality factors) to demand data 220. An example formula which takes into account several seasonality factors as well as variant factors 340 is as follows:

$$\text{Daily demand} = (\text{Average past demand}) \times (\% \text{ change in past demand}) \times$$

$$(\text{Month factor}) \times (\text{Day-of-week factor}) \times$$

$$(\text{Week-of-month factor}) \times (\text{variant factor})$$

Change in past demand is computed using the growth trend equation. Different types of growth trends - such as month-over-month (months are compared consecutively) or year-to-previous-year (each month is compared to corresponding month in previous year) - can be identified. In addition, trends can be classified as scalar (constant growth) and linear (growth increases or decreases linearly). A person of ordinary skill in the art is familiar with the mathematical techniques used to identify trends (e.g. linear regression). When processing demand data 220 to calculate the growth trend, variant days are normalized, by replacing the demand data for that variant day with the data for the corresponding "typical" or "non-variant" day (described below).

Some embodiments of process 500 include an additional step 570 after strategic forecast 310 is generated at step 560. Optional block 570 combines strategic forecast 310 with a tactical forecast (described earlier in connection with FIG. 2), using a weighting factor whch describes the relative importance of the two forecasts. In some embodiments in which demand data 220 includes multiple measures of demand (e.g., call volume and average handle time), relative weights can be specified per-measure. Block 570 scales the tactical forecast up or down on an interval basis (e.g., 15-minute intervals), such that the combined forecast for a day is equal to the (daily tactical forecast * tactical weight ) + (daily strategic forecast * strategic weight).

FIG. 6 is a flowchart of the variant factor computation of block 550 from FIG. 5. Process 550 begins at block 610, which begins a loop which iterates though the identified variant periods 330. Processing continues at block 620, which examines dates within the variant date range (which may be different than the date range for demand data 220, as discussed above. Block 620 finds one or more "typical" (non-variant) dates within the variant date range that correspond to the current variant 330. In one embodiment, typical dates are those which occur on the same day-of-week and in the same month. For example, if the current variant date is Tuesday, July 4, 2006, and the variant date range is June 2006-December 2006, then the typical dates found by block 620 would be all the Tuesdays in July 2006 except July 4, 2006.

In another embodiment, user-specified names (e.g., special event names 485 or queue reconfiguration names 497) are used to find typical dates. In these embodiment, if a day in the future is marked as special event, special events in the past with the same name (485) as that of the future day are considered to be typical days. Once the special event factor is identified from the history, it is applied on a future date that is marked as special event. Queue reconfiguration names 497 are used in a similar manner.

Processing continues at block 630, which computes the variant factor 340 for the current variant as the ratio of the past demand at the variant date, to the average of past demand at the corresponding typical dates. In the example above, this would be (call volume on July 4, 2006) / (average call volume on July 11, 18 and 25). The next identified variant day is selected at the close of the iteration loop (block 640), and the iteration loop repeats starting at block 620. When all variant periods 330 have been handled, process 550 is complete.

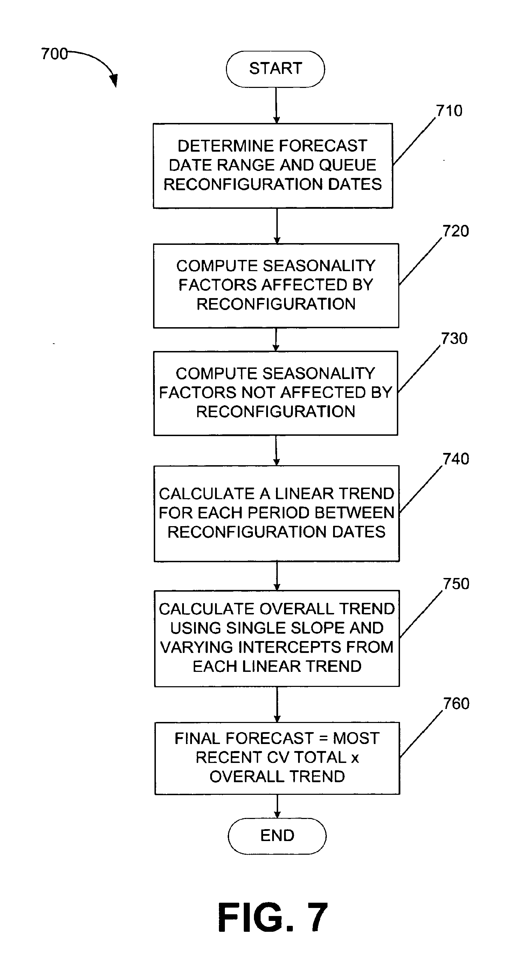

FIG. 7 is a flowchart of a forecasting process implemented by one embodiment of strategic forecaster 240, which takes into account queue reconfiguration. The process 710 begins at block 720, which determines the date range of the demand data 220 and the dates of queue reconfiguration. (Queue reconfiguration and its effect on demand forecasting were discussed earlier in connection with FIG. 4.) In one embodiment, these dates are specified by a user.

Processing continues at block 730, where those seasonality factors affected by the change are computed using demand data 220 that excludes the reconfiguration dates. Block 740 then uses all of demand data 220 to compute the remaining seasonality factors unaffected by the change. In some embodiments, the user specifies which factors are affected by the reconfiguration, for example, using window 490 of FIG. 4C. In other embodiments, strategic forecaster 240 makes this determination based on information known about the reconfiguration. For example, a reconfiguration involving addition or deletion of some agent groups from the queue affects month-of-week, so that day-of-week and week-of-month factors can be computed using all of demand data 220. Similarly, a queue reconfiguration involving a change in the hours of operation affects day-of-week but not month-of-week or week-of-month.

Next, block 750 calculates a linear trend for each period between two reconfiguration dates. Block 760 then calculates the overall trend for the entire date range, using the single slope (a) calculated at block 750, and the appropriate intercepts (b1...bn) calculated at block 750 for the various periods between dates. For example, with a date range 01/01/xx - 02/01/xx and reconfiguration dates 04/15/xx, 07/20/xx, and 11/18/xx, then the linear trends are identified as:

$$01/01/xx{-}04/14/xx:\ Y1 = a1X + b1;$$

$$04/15/xx - 07/19/xx:\ Y2 = a2X+b2;$$

$$07/20/xx - 11/7/xx:\ Y3 = a3X+b3;$$

and

$$11/18/xx - 12/31/xx:\ Y4 = a4X+b4$$

Thus, this embodiment of strategic forecaster 240 ignores data before queue reconfiguration events when doing regression analysis, by identifying dates of the events and finding the total call volume and call volume distribution before and after those marked dates. This results in a more accurate strategic forecast as compared to conventional techniques.

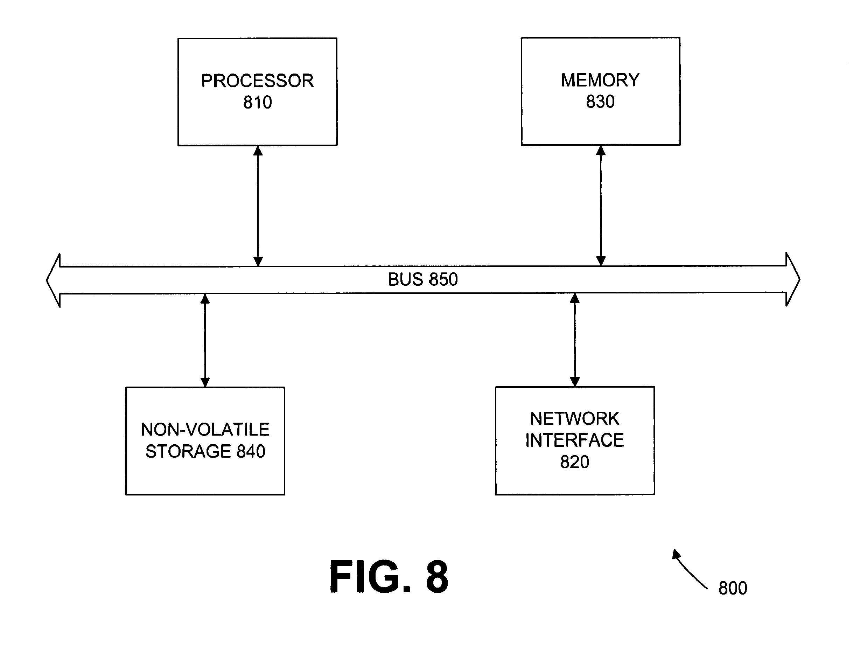

FIG. 8 is a hardware block diagram of a general-purpose computer 800 that can be used to implement one or more of the components of strategic forecaster 240 disclosed herein. Computer 800 contains a number of components that are known in the art, including a processor 810, a network interface 820, memory 830, and non-volatile storage 840. Examples of non-volatile storage include, for example, a hard disk, flash RAM, flash ROM, EEPROM, etc. These components are coupled via a bus 850. Memory 830 contains instructions which, when executed by processor 810, implement logic to account for variant data 260. Omitted from FIG. 8 are a number of conventional components, known to those of ordinary skill in the art, that are unnecessary to explain the operation of the computer 800.

The systems and methods disclosed herein can be implemented in software, hardware, or a combination thereof. In some embodiments, the system and/or method is implemented in software that is stored in a memory and that is executed by a suitable microprocessor ($\mu$P) situated in a computing device. However, the systems and methods can be embodied in any computer-readable medium for use by or in connection with an instruction execution system, apparatus, or device. Such instruction execution systems include any computer-based system, processor-containing system, or other system that can fetch and execute the instructions from the instruction execution system. In other embodiments, the system and/or method is implemented in hardware, including, but not limited to, a programmable logic device (PLD), programmable gate array (PGA), field programmable gate array (FPGA) or an application-specific integrated circuit (ASIC).

In the context of this disclosure, a "computer-readable medium" can be any means that can contain, store, communicate, propagate, or transport the program for use by, or in connection with, the instruction execution system. The computer readable medium can be, for example but not limited to, a system or propagation medium that is based on electronic, magnetic, optical, electromagnetic, infrared, or semiconductor technology.

Specific examples of a computer-readable medium using electronic technology would include (but are not limited to) the following: an electrical connection (electronic) having one or more wires; a random access memory (RAM); a read-only memory (ROM); an erasable programmable read-only memory (EPROM or Flash memory). A specific example using magnetic technology includes (but is not limited to) a portable computer diskette. Specific examples using optical technology include (but are not limited to) optical fiber and compact disc read-only memory (CD-ROM).

It should be noted that any process descriptions or blocks in flowcharts should be understood as representing modules, segments, or portions of code which include one or more executable instructions for implementing specific logical functions or steps in the process. As would be understood by those of ordinary skill in the art of the software development, alternate embodiments are also included within the scope of the disclosure. In these alternate embodiments, functions may be executed out of order from that shown or discussed, including substantially concurrently or in reverse order, depending on the functionality involved.

This description has been presented for purposes of illustration and description. It is not intended to be exhaustive or to limit the disclosure to the precise forms disclosed. Obvious modifications or variations are possible in light of the above teachings. The embodiments discussed, however, were chosen to illustrate the principles of the disclosure, and its practical application. The disclosure is thus intended to enable one of ordinary skill in the art to use the disclosure, in various embodiments and with various modifications, as are suited to the particular use contemplated. All such modifications and variation are within the scope of this disclosure, as determined by the appended claims when interpreted in accordance with the breadth to which they are fairly and legally entitled.

**Claims**

1.  A computer-implemented method for strategic forecasting of demand for a customer center, comprising:

    receiving an identification of a variant date, the variant date associated with a measure of demand on the variant date;
    receiving a variant date range used in determining a variant factor;
    the method **characterized by**:

    finding a non-variant date in the variant date range that corresponds to the variant date but that does not correspond to the identified variant date;
    computing the variant factor describing an effect of the variant period on the past demand; and
    generating a strategic forecast including a forecast for the variant date based past demand data for the variant date and the variant factor.

2.  The method of claim 1, further comprising:

    computing the variant factor as a ratio of the demand data on the variant date to the demand data at the corresponding non-variant date.

3.  The method of claim 1, wherein the identification corresponds to a special event.

4.  The method of claim 1, wherein the identification corresponds to an outlier.

5.  The method of claim 1, wherein the identification corresponds to a queue reconfiguration event.

**6.** The method of claim 1, further comprising:

identifying a possible variant; and
receiving an indication that the possible variant is to be treated by the method as a variant.

**7.** The method of claim 1, further comprising:

receiving a tactical forecast; and
combining the received tactical forecast with the generated strategic forecast in accordance with a weighting factor that describes relative importance of the tactical forecast and the strategic forecast.

**8.** A system (800) for strategic forecasting of demand for a customer center, comprising:

an interface (820) configured to:

receive an identification of a variant date, the variant date associated with a measure of demand on the variant date; and
receive a variant date range used in determining a variant factor;
the system **characterized by**:

a processing system (810) configured to:

find a non-variant date in the variant date range that corresponds to the variant date but that does not correspond to the identified variant date;
compute the variant factor describing an effect of the variant period on the past demand; and
generate a strategic forecast including a forecast for the variant date based past demand data for the variant date and the variant factor.

**9.** The system of claim 8, wherein the processing system further configured to:

compute the variant factor as a ratio of the demand data on the variant date to the demand data at the corresponding non-variant date.

**10.** The system of claim 8, wherein the identification corresponds to a special event.

**11.** The system of claim 8, wherein the identification corresponds to an outlier.

**12.** The system of claim 8, wherein the identification corresponds to a queue reconfiguration event.

**13.** The system of claim 8, wherein the processing system further configured to:

identify a possible variant; and
receive an indication that the possible variant is to be treated by the method as a variant.

**14.** The system of claim 8, wherein the processing system further configured to:

receive a tactical forecast; and
combine the received tactical forecast with the generated strategic forecast in accordance with a weighting factor that describes relative importance of the tactical forecast and the strategic forecast.

**15.** A computer-implemented method of strategic forecasting of demand for a customer center, comprising:

receiving demand data;
the method **characterized by**:

computing a variant factor associated with a variant, the variant comprising a variant date and a measure of demand on the variant date;
generating a forecast for the variant date, based on the variant factor and on the demand data for the variant date.

FIG. 1

FIG. 2

STRATEGIC FORECASTER
240

DEMAND
DATA
220

LOGIC TO
ACCOUNT FOR
VARIANT DATA
260

VARIANT DESCRIPTIONS
330

QUEUE IDENTIFIER
320

VARIANT FACTOR
340

FORECASTER
350

STRATEGIC FORECAST
310

# FIG. 3

400

## Mark Days : Q1

| Day | CV | AHT | Marked |
|---|---|---|---|
| Sun, Jan 08 2006 | 390 | 331 | |
| Mon, Jan 09 2006 | 643 | 351 | |
| Tue, Jan 10 2006 | 279 | 352 | |
| Wed, Jan 11 2006 | 402 | 276 | |
| Thu, Jan 12 2006 | 720 | 322 | |
| Fri, Jan 13 2006 | 472 | 320 | |
| Sat, Jan 14 2006 | 533 | 330 | |
| Sun, Jan 15 2006 | 515 | 202 | Yes |
| Mon, Jan 16 2006 | 697 | 244 | |
| Tue, Jan 17 2006 | 628 | 252 | |
| Wed, Jan 18 2006 | 515 | 257 | |
| Thu, Jan 19 2006 | 591 | 275 | |
| Fri, Jan 20 2006 | 335 | 345 | |
| Sat, Jan 21 2006 | 256 | 227 | |
| Sun, Jan 22 2006 | 534 | 268 | |

410

Jan 15, 2006 [Special Event : hol]
Feb 26, 2006 [Special Event : hol]
Feb 20, 2007 [Special Event : hol]
Jun 4, 2007 [Special Event : hol]

450

440

470

Select next outlier    Select all outliers

475

460

◉ Mark As Outlier
○ Mark As Special event
○ Mark As Reconfiguration

Include day          ○ Yes  ◉ No
CV
AHT

Set    Set to all Queues    Cancel

420

430

# FIG. 4A

**480**

**Create/Edit special event day** ✕

485

Name | hol|

Use system determined special event weight  ⦿ Yes ○ No

487

Enter call volume special event weight

Enter AHT special event weight

| Delete | Set | Cancel |

## FIG. 4B

**490**

**Create/Edit reconfiguration day** ✕

495

Name | qr

Attribute(s) changed:

☑ Growth percentage changes

☐ Day of week weight changes

497

☐ Week of month weight changes

☐ Month weight changes

| Delete | Set | Cancel |

## FIG. 4C

```
                    ┌─────────────┐
                    │    START    │
                    └─────────────┘
                           │
                           ▼
              ┌───────────────────────────┐     510
              │   DETERMINE DATE RANGE     │
              └───────────────────────────┘
                           │
                           ▼
              ┌───────────────────────────┐     520
              │    IMPORT DEMAND DATA      │
              └───────────────────────────┘
                           │
                           ▼
              ┌───────────────────────────┐     530
              │ RECEIVE VARIANT DESCRIPTIONS│
              └───────────────────────────┘
                           │
                           ▼
              ┌ ─ ─ ─ ─ ─ ─ ─ ─ ─ ─ ─ ─ ─ ┐   540
                COMPUTE SEASONALITY FACTORS
              └ ─ ─ ─ ─ ─ ─ ─ ─ ─ ─ ─ ─ ─ ┘
                           │
                           ▼
              ┌───────────────────────────┐     550
              │  COMPUTE VARIANT FACTORS   │
              └───────────────────────────┘
                           │
                           ▼
              ┌───────────────────────────┐     560
              │ PRODUCE STRATEGIC FORECAST │
              │    USING VARIANT FACTORS   │
              └───────────────────────────┘
                           │
                           ▼
              ┌ ─ ─ ─ ─ ─ ─ ─ ─ ─ ─ ─ ─ ─ ┐   570
                  COMBINE STRATEGIC AND
                   TACTICAL FORECASTS
              └ ─ ─ ─ ─ ─ ─ ─ ─ ─ ─ ─ ─ ─ ┘
                           │
                           ▼
                    ┌─────────────┐
                    │     END     │
                    └─────────────┘
```

400

# FIG. 5

550

START

610
ITERATE THROUGH
IDENTIFIED
VARIANTS

620
FIND TYPICAL DATES WITHIN
VARIANT DATE RANGE THAT
CORRESPOND TO VARIANT
DATE

630
COMPUTE VARIANT FACTOR
BASED ON VALUE AT VARIANT
DATE AND VALUES AT TYPICAL
DATES

640
MORE VARIANTS   NEXT IDENTIFIED
VARIANT

NO MORE
VARIANTS

END

# FIG. 6

700

START

DETERMINE FORECAST
DATE RANGE AND QUEUE
RECONFIGURATION DATES

710

COMPUTE SEASONALITY
FACTORS AFFECTED BY
RECONFIGURATION

720

COMPUTE SEASONALITY
FACTORS NOT AFFECTED BY
RECONFIGURATION

730

CALCULATE A LINEAR TREND
FOR EACH PERIOD BETWEEN
RECONFIGURATION DATES

740

CALCULATE OVERALL TREND
USING SINGLE SLOPE AND
VARYING INTERCEPTS FROM
EACH LINEAR TREND

750

FINAL FORECAST = MOST
RECENT CV TOTAL x
OVERALL TREND

760

END

# FIG. 7

EP 1 998 278 A1

```
┌─────────────────┐                    ┌─────────────────┐
│    PROCESSOR    │                    │     MEMORY      │
│       810       │                    │       830       │
└─────────────────┘                    └─────────────────┘
         ↕                                      ↕

◄══════════════════════ BUS 850 ══════════════════════►

         ↕                                      ↕
┌─────────────────┐                    ┌─────────────────┐
│  NON-VOLATILE   │                    │    NETWORK      │
│  STORAGE 840    │                    │   INTERFACE     │
│                 │                    │      820        │
└─────────────────┘                    └─────────────────┘
```

# FIG. 8

800

European Patent
Office

**EUROPEAN SEARCH REPORT**

Application Number

EP 08 25 1877

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | The technical aspects identified in the present application (Art. 92 EPC) are considered part of common general knowledge. Due to their notoriety no documentary evidence is found to be required. For further details see the accompanying Opinion and the reference below.<br>XP002456252<br>----- | 1-15 | INV.<br>G06Q10/00 |
| | | | TECHNICAL FIELDS SEARCHED (IPC)<br><br>G06Q |

The present search report has been drawn up for all claims

| Place of search | Date of completion of the search | Examiner |
|---|---|---|
| Munich | 6 October 2008 | Peller, Ingrid |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...........................................................................
& : member of the same patent family, corresponding
   document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 35935606 A
- US 54018506 A